# EUROPEAN PATENT APPLICATION

(11) **EP 2 165 981 A1**
(43) Date of publication of application: **24.03.2010**
(21) Application number: 08014822.4
(22) Date of filing: 21.08.2008
(51) Int. Cl.: C02F 1/76, C02F 103/22

(54) **Antimicrobial water treatment**

(71) Applicant: LONZA, INC., Allendale, NJ 07401-1613 (US)
(72) Inventor: The designation of the inventor has not yet been filed
(74) Representative: Riegler, Norbert Hermann

(57) **Abstract**

The present invention is a method for treating water associated with live-food processing which contains lipids. The method involves contacting an aqueous medium containing lipids and requiring antimicrobial treatment with a source of halogen and a non-halogenated stabilizer in an amount sufficient to provide antimicrobial activity to the medium.

## Description

The present invention relates to a method for disinfecting water containing biological materials, and, in particular, to maximizing the effectiveness of halogen disinfecting agents.

Sodium hypochlorite (bleach) is a commonly used and highly effective biocide. It has broad spectrum bactericidal activity due to its ability to alter cellular metabolism, and induce irreversible enzymatic inactivation of bacteria.

The ability of sodium hypochlorite to act as a biocide is thought to be due to its oxidizing potential. The potency of sodium hypochlorite is dependent on the amount of contamination present and the pH of the media (e.g., hard surface, aqueous solution, viscous agglomerate) treated. In media with high levels of contamination, sodium hypochlorite oxidizes the contamination, thereby reducing the concentration of the sodium hypochlorite. As the alkalinity of the medium, and the quantity of contamination in or on the medium increase, the biocidal activity of the sodium hypochlorite decreases.

In place of sodium hypochlorite, other sources of halogens have been used as biocides. For example, chlorinated stabilizers have been used as a source of halogen. U.S. Patent No. 6,825,159 to Man et al. discloses an alkaline cleaning solution with increased chlorine stability. The solution of Man et al. includes a less-than-fully-ionized source of alkalinity, a source of chlorine (such as 1,3-dichloro-5,5-dimethylhydantoin) and a polar carrier. U.S. Patent No. 6,303,038 to Sanders et al. describes a combination of dialkylhydantoin, a source of bromide ion, and a bromide ion oxidizing agent.

Several methods of providing antimicrobial treatment to water in paper processing have been proposed. U.S. Patent No. Re 39,021 to Sweeny discloses the use of N-hydrogen compounds and their chlorinated derivatives to improve the bactericidal efficacy of hypochlorite solution in pulp and paper slurries. U.S. Patent No. 6,429,181 to Sweeny discloses use of partially halogenated hydantoins in paper processing. Paper processing waters typically consist primarily of rosin, starch and fiber.

The impact of biological contamination on the efficacy of sodium hypochlorite is evidenced in food processing. In the case of poultry, 9 C.F.R. 381.91 requires chlorinated water containing a minimum amount available chlorine to treat contamination. Consequently, the United States Department of Agriculture (USDA) Food Safety and Inspection Service allow addition of chlorine, up to 50 ppm in pre-chill waters and 5 ppm in poultry processing and chilling waters. As the sodium hypochlorite oxidizes the contamination present in processing waters, the concentration of the hypochlorite is reduced. Therefore, additional hypochlorite is required to maintain biocidal efficacy.

In treating the microbiological contamination created by poultry processing, U.S. Patent No. 6,908,636 to Howarth discloses a 1,3-dibromo-5,5-dialkylhydantoin, a derivative of 1,3-dibromo-5,5-dialkylhydantoin, or a combination of the two as an antimicrobial treatment for poultry. U.S. Patent No. 6,998,057 to Ferguson discloses a method for monitoring and controlling chlorine levels in an aqueous medium wherein a water soluble source of free chlorine (such as chloride ion-containing halo-substituted hydantoins) and chloride ion is mixed with an aqueous fluid.

Nothing in the prior art discloses or suggests how to maximize the antimicrobial efficacy of a halogen in the presence of high lipid content waste water from food processing facilities. The present invention, however, is intended to enhance and/or maximize the anti-microbial efficacy of halogens, especially hypochlorite, under high lipid conditions.

The present invention is a method for antimicrobial treatment of lipid-containing aqueous media associated with the processing of foodstuffs selected from meat, fish and poultry. For the purpose of this patent application, the term "meat" is to be understood to include both flesh and offal. The term "fish" is to be understood to include both vertebrate fish and shellfish such as molluscs, crustaceans, and echinoderms. The term "poultry" is to be understood to include any edible bird, including, but not limited to, such as chicken, duck, goose, turkey and pigeon. This method involves contacting the aqueous medium, which requires antimicrobial treatment, with a source of halogen and a non-halogenated stabilizer for the source of halogen, in an amount sufficient to provide antimicrobial activity to the aqueous medium. In particular, the lipid-containing aqueous medium may further comprise one or more contaminants selected from the group consisting of blood, fecal matter, intestinal contents, and parasites. In a preferred embodiment the method of the invention is used for the anticrobial treatment of lipid-containing aqueous media in poultry processing.

The source of halogen is preferably selected from the group consisting of lithium hypochlorite, sodium hypochlorite, potassium hypochlorite, magnesium hypochlorite, calcium hypochlorite, chlorine gas, bromine chloride, sodium bromide, 1,3-dibromo-5,5-dimethylhydantoin, 1,3-dichloro-5,5-dimethylhydantoin, trichloroisocyanuric acid, sodium dichloroisocyanurate and combinations thereof. The nonhalogenated stabilizer is preferably selected from the group consisting of 5,5-dimethylhydantoin, *p*-toluenesulfonamide, methylethylhydantoin, cyanuric acid, succinimide, urea, 4,4-dimethyl-2-oxazolidinone, glycoluril and combinations thereof. More preferably the non-halogenated stabilizer is 5,5-dimethylhydantoin.

The source of halogen and non-halogenated stabilizer are preferably present in a molar ratio from 1:20 to 20:1. More preferably, the molar ratio of the source of halogen to the non-halogenated stabilizer is from 1:5 to 5:1. Most preferably, the molar ratio of the source of halogen to non-halogenated stabilizer is from 1:1 to 1:1.2 or approximately 1:1.1.

In a preferred embodiment the source of halogen utilized in the method provides from 0.05 ppm to 50 ppm of total available halogen, more preferably from 0.5 ppm to 12 ppm, most preferably from 5 ppm to 10 ppm of total available halogen in order to achieve antimicrobial activity. In another preferred embodiment, when the method of the invention is used for decontamination, the amount of total available halogen is from 15 ppm to 500 ppm of total available halogen, more preferably from 17 ppm to 50 ppm of total available halogen, most preferably about 20 ppm of total available halogen. Any minimum and any maximum of the above numbers can be combined to form a range of adequate available halogen.

As a consequence of the invention, halogen based antimicrobial treatment procedures are improved by reducing or eliminating the requirement for additional halogen containing antimicrobial agent(s). This reduction in the amount of added halogen is achieved by use of a non-halogenated stabilizer which increases the duration for which an effective concentration is maintained. The non-halogenated stabilizer and the source of halogen can be selected from those delineated above.

In still another embodiment of the invention, known processes for decontaminating, sanitizing, or antimicrobially treating poultry with a halogen in an aqueous medium are improved upon. This improvement is effected by providing a non-halogenated stabilizer in an amount sufficient to maintain an effective amount of total available halogen. This occurs without increasing the amount of the source of halogen. Again, the types of nonhalogenated stabilizer can be selected from those delineated above.

Antimicrobial treatment of waste water in accordance with the invention provides an effect which can be used for lipid-containing waste water such as that resulting from poultry processing. Poultry carcasses are contaminated and include a large lipid content. Consequently, antimicrobial treatment of poultry waste water is challenged by the presence of lipids.

As a result of the present invention, the efficacy of a halogen based antimicrobial is enhanced and/or maximized in the presence of lipids. The quantity of halogen required to provide antimicrobial activity over a given period of time is decreased. Accordingly, less halogen based antimicrobial is necessary to maintain an efficacious level of halogen. Lipid build up that allows for the encasement of microbes in lipids, thereby protecting them from antimicrobials, is reduced. Additionally, the presence of non-halogenated stabilizer minimizes unwanted byproducts, such as, for example, trihalomethanes and nitrogen trichloride.

The term "lipids" as used in the invention includes, without being limited thereto, triglycerides, fatty acyls, glycerolipids, glycerophospholipids, sphingolipids, saccharolipids and polyketides; and sterol lipids and prenol lipids.

Aqueous media associated with foodstuff processing includes both water used during foodstuff processing and water resulting from foodstuff processing. It typically contains additional contaminants, for example, blood, fecal matter, intestinal contents, and parasites.

Foodstuff processing according to the invention includes processing of animals for food. The animals processed include, for example, poultry, cattle, fish, swine, and goats. Water associated with foodstuff processing is found, for example, in rendering facilities, meat packing facilities, slaughterhouses, and poultry processing facilities.

Water containing lipids arises from the sources listed above as well as many additional sources. Farm and ranch run-off generated by rain produces water containing lipids and other detritus. Waste and sewage generated by humans creates water containing lipids. Manufacturing and processing facilities often generate water containing lipids. Poultry processing produces water containing blood, lipids, fecal material, protein and additional biological detritus. This water can be treated using the present invention.

Contacting of the aqueous medium according to the inventive method can occur in various manners. A source of halogen and non-halogenated stabilizer can be added simultaneously to the aqueous medium or each component can be added independent of the other. The contacting can occur as a single event (e.g. one addition per batch processed), as needed when the level of total available halogen reaches a specific point. Alternatively, the halogen source and the non-halogenated stabilizer can be steadily added to the aqueous stream during the process. If the source of halogen or the non-halogenated stabilizer is a solid material, it can be solubilized prior to contacting the aqueous medium requiring antimicrobial treatment.

Total available halogen is the sum of free and combined halogen, with the combined portion stabilized to consumption by high levels of contamination. The source of halogen can be any source acceptable for contact with the item being processed, such as, for example, lithium hypochlorite, sodium hypochlorite, potassium hypochlorite, magnesium hypochlorite, calcium hypochlorite, chlorine gas, bromine chloride, sodium bromide, 1,3-dibromo-5,5-dimethylhydantoin, 1,3-dichloro-5,5-dimethylhydantoin, trichloroisocyanuric acid, sodium dichloroisocyanurate, brominated sulfamic acid and any other alkaline metal or halogenated stabilizer. Any combination of halogen sources is also acceptable.

The method also includes use of non-halogenated stabilizers and N-hydrogen compounds including, for example, 5,5-dimethylhydantoin, glycoluril, sulfamide, trisulfamide, *p*-toluenesulfonamide, melamine, 5,5-dialkylhydantoins, methanesulfonamide, barbituric acid, 5-methyluracil, imidazoline, pyrrolidone, acetanilide, acetamide, N-ethylacetamide, phthalimide, benzamide, succinimide, cyanamide, urea, N-methylolurea, N-methylurea, acetylurea, biuret, methyl allophanate, methyl carbamate, phthalohydrazide, pyrrole, indole, formamide, *N*-methylformamide, dicyandiamide, ethyl carbamate, 1,3-dimethylbiuret, methylphenylbiuret, 4,4-dimethyl-2-oxazolidinone, 6-methyluracil, 2-imidazolidone, ethylene urea, 2-pyrimidone, N-ethylacetamide, ammonium salts such as ammonium bromide or ammonium sulfate, and others. Any combination of non-halogenated stabilizers is also acceptable for this method.

The amount sufficient to provide antimicrobial activity to the aqueous medium requiring anti-microbial treatment will vary depending on lipid content. Any amount that will provide antimicrobial effects to the medium is satisfactory. However, the two components of the method are typically present in an amount from 1:20 molar ratio to 20:1 molar ratio, preferably from 1:5 molar ratio to 5:1 molar ratio, and more preferably, an approximately 1:1.1 molar ratio. Any minimum molar ratio and any maximum molar ratio from above can be combined to form an acceptable range.

The amount of total available halogen in the aqueous medium requiring treatment can be any amount sufficient to provide an antimicrobial effect to the medium. For example, the source of halogen can provide total available halogen in an amount from 0.05 ppm to 50 ppm, preferably from 0.5 ppm to 12 ppm, and more preferably from 5 ppm to 10 ppm total available halogen. Once again, any minimum and any maximum amounts can be combined to form an acceptable range. To effect decontamination, the source of halogen can provide any amount that will decontaminate the medium requiring decontamination. Thus, the source of total available halogen can provide, for example, from 15 ppm to 500 ppm, preferably from 17 ppm to 50 ppm, more preferably about 20 ppm total available halogen. Any minimum can be combined with any maximum to form a suitable range for the total available halogen.

Halogen-based antimicrobials, such as bleach, are commonly used. From domestic applications, to large scale medical, manufacturing, or processing facilities, applications of halogen based antimicrobials are common. In situations where there is water containing a higher lipid level to be treated, the addition of halogen based antimicrobial treatment can be on a continual basis as lipid levels and pH greatly impact the presence of total available halogen. The present invention improves upon commonly known halogen based antimicrobial treatments by adding a non-halogenated stabilizer to the halogen based antimicrobial treatment. The addition of non-halogenated stabilizer prolongs the availability of halogen for a given amount of halogen source.

Several processes for decontaminating or sanitizing poultry with halogen and aqueous medium are also known. The present invention improves upon these processes by the addition of a non-halogenated stabilizer in an amount sufficient to maintain a minimally effective amount of total available halogen without increasing the amount of the source of halogen. The non-halogenated stabilizer can be selected from those listed above. For example, 5,5-dimethylhydantoin, cyanuric acid, etc. In this process, the addition of halogen to the process for decontaminating poultry occurs as a singular event.

The present invention can be better understood by reference to the following example. The following example illustrates the present invention and is not intended to limit the invention or its scope in any manner.

### Example 1

In order to study how the level of total available halogen is impacted by the presence of a non-halogenated stabilizer, the following experiment was conducted.

During the experiment, two vessels containing 1.0% chicken broth were continuously stirred. The temperature of the broth was maintained at 22 °C for the duration of the experiment. The source of total halogen was sodium hypochlorite. At time zero, sodium hypochlorite having a total halogen level of 4 ppm was applied as a single dose to one vessel. Simultaneously sodium hypochlorite having 4 ppm of total halogen was added to the second vessel along with 5,5-dimethylhydantoin (DMH) in a 1:1.1 molar ratio NaOCl to DMH. The results are shown in Table 1 below.

**Table 1**

| **Time [min]** | **NaOCl** | **NaOCl:DMH (1:1.1 mol)** |
|---|---|---|
| | **Total Available Cl₂ [ppm)]** | **Total Available Cl₂ [ppm]** |
| 0 | 4.7 | 4.2 |
| 5 | 1.2 | 1.5 |
| 15 | 0.9 | 1.3 |
| 30 | 0.6 | 1.3 |
| 60 | 0.4 | 1.2 |
| 90 | 0.3 | 1.1 |

Over time the amount of total available chlorine (Cl₂) remained higher in the presence of DMH. Thus, after five (5) minutes, total available Cl₂ with DMH remained at 1.5 ppm as compared to 1.2 ppm using NaOCl alone. Similarly, after fifteen minutes, total available Cl₂ with DMH was 1.3 ppm while without DMH the total available Cl₂ had dropped to 0.9 ppm. After thirty minutes, the NaOCI alone fell to 0.6 ppm while with DMH the total available Cl₂ was maintained at 1.3 ppm. After 60 minutes the difference between NaOCl alone (0.4 ppm) and the NaOCl-DMH combination (1.2 ppm) was 0.8 ppm. The same difference (0.8 ppm) was seen at 90 minutes when NaOCl alone was 0.3 ppm and the NaOCl-DMH combination was 1.1 ppm.

Therefore, addition of DMH provided greater stabilization of available halogen from sodium hypochlorite. In the presence of 1 % chicken broth, the application of a 1:1.1 molar mixture of sodium hypochlorite to 5,5-dimethylhydantoin provided a significantly higher amount of total available halogen and that amount, was maintained longer than the amount of total available halogen from sodium hypochlorite alone.

## Claims

1. A method for antimicrobial treatment of a lipid-containing aqueous medium in the processing of foodstuff selected from meat, fish and poultry, comprising contacting said lipid-containing aqueous medium with
(i) a source of halogen, and
(ii) a non-halogenated stabilizer for said source of halogen
in amounts sufficient to provide antimicrobial activity to said medium.

2. The method of claim 1 wherein said lipid-containing aqueous medium further comprises one or more contaminants selected from the group consisting of blood, fecal matter, intestinal contents, and parasites.

3. The method of claim 1 or 2 wherein said foodstuff is poultry.

4. The method of any of claims 1 to 3 wherein said source of halogen is selected from the group consisting of lithium hypochlorite, sodium hypochlorite, potassium hypochlorite, magnesium hypochlorite, calcium hypochlorite, chlorine, bromine, bromine chloride, sodium bromide, 1,3-dibromo-5,5-dimethylhydantoin, 1,3-dichloro-5,5-dimethylhydantoin, trichloroisocyanuric acid, sodium dichloroisocyanurate, brominated sulfamic acid, and combinations thereof.

5. The method of any of claims 1 to 4 wherein said non-halogenated stabilizer is selected from the group consisting of 5,5-dimethylhydantoin, *p*-toluenesulfonamide, methylethylhydantoin, cyanuric acid, succinimide, urea, 4,4-dimethyl-2-oxazolidinone, glycoluril, ammonium salts and combinations thereof.

6. The method of claim 5 wherein said non-halogenated stabilizer is 5,5-dimethylhydantoin.

7. The method of any of claims 1 to 6 wherein said source of halogen and said non-halogenated stabilizer are present in a molar ratio from 20:1 to 1:20.

8. The method of claim 7 wherein said source of halogen and said source of non halogenated stabilizer are present in a molar ratio from 5:1 to 1:5.

9. The method of claim 8 wherein said source of halogen and said source of nonhalogenated stabilizer are present in a molar ratio of from 1:1 to 1:1.2.

10. The method of any of claims 1 to 9 wherein said source of halogen provides from 0.05 ppm to 50 ppm of total available halogen.

11. The method of claim 10 wherein said source of halogen provides from 0.5 ppm to 12 ppm of total available halogen.

12. The method of claim 11 wherein said source of halogen provides from 5 ppm to 10 ppm of total available halogen.

13. The method of any of claims 1 to 12 wherein said source of halogen provides from 15 ppm to 500 ppm of total available halogen.

14. The method of claim 13 wherein said source of halogen provides from 17 ppm to 50 ppm of total available halogen.

15. The method of claim 14 wherein said source of halogen provides about 20 ppm of total available halogen.
